# EUROPÄISCHE PATENTANMELDUNG

(11) **EP 3 309 047 A1**
(43) Veröffentlichungstag der Anmeldung: **18.04.2018**
(21) Anmeldenummer: 16193263.7
(22) Anmeldetag: 11.10.2016
(51) Int. Cl.: B62J 1/14, A47C 7/02, A47C 7/54, B62J 7/04

(54) **LUFTGEFÜLLTES SITZKISSEN FÜR GEPÄCKTRÄGER**

(71) Anmelder: Heinz, Paulina Marie, 20249 Hamburg (DE)
(72) Erfinder: Heinz, Paulina Marie, 20249 Hamburg (DE)
(74) Vertreter: Kossak, Sabine

(57) **Zusammenfassung**

Gegenstand der Erfindung ist ein Sitzkissen für Gepäckträger aufweisend mindestens ein luftgefülltes Kissen und mindestens einen schlaufenförmigen Klettverschluss an der Kissenunterseite. Durch die Füllung mit Luft ist das erfindungsgemäße Sitzkissen sehr leicht und hat nur ein geringes Eigengewicht. Es ist variable einsetzbar und erfordert nicht erst die Montage zusätzlicher Anbauteile. Das Sitzkissen wird an einem herkömmlichen Gepäckträger, bevorzugt einem Fahrradgepäckträger montiert. Das erfindungsgemäße Sitzkissen kann im leeren, ungefüllten Zustand sehr klein zusammengerollt und somit überall mit hingenommen werden. Gegenstand der Erfindung ist weiterhin ein Gepäckträger mit dem erfindungsmäßen luftgefüllten Sitzkissen.

## Beschreibung

Gegenstand der Erfindung ist ein Sitzkissen für Gepäckträger, das mit Klettverschlüssen an der Kissenunterseite am Gepäckträger befestigt wird und ein Gepäckträger mit diesem Kissen.

Bei vielen Zweirädern ist es gewünscht zusätzliche Personen oder Gegenstände auf dem Gepäckträger zu transportieren. Beispielweise dürfen Kinder bis 7 Jahre auf einem Fahrrad oder Elektro-Fahrrad mitgenommen werden. Entsprechend fährt eine Person das Zweirad und die andere sitzt hinten auf dem Gepäckträger. Der Gepäckträger ist aus Metall und daher hart und unbequem. Auch beim Transport empfindlicher Lasten ist eine Polsterung notwendig. Es werden verschiedene Kissen angeboten, die zum Transport von Personen oder Lasten oder zum Sitzen auf dem stehenden Zweirad dienen. Die bisher bekannten Kissen bestehen meist aus einem Schaumstoff, der mit einem Bezug überzogen ist. Sie sind sperrig, schwer zu transportieren und verrutschen ggf. wenn man damit auf dem Fahrrad sitzt. Manche Kissen weisen daher zusätzliche Befestigungsmittel auf.

Ein Gepäckträger mit einem Sitzelement ist in der DE 20 2013 104 604 U1 beschrieben. Der Gepäckträger weist einen zusätzlichen Rahmen auf an dem ein Sitzelement angebracht wird. Das Sitzelement ist ein passend zum Rahmen geformtes Kissen ähnlich wie bei einem Möbelstück. Eine Benutzung des Kissens ohne den speziellen Gepäckträger ist nicht möglich.

Gegenstand der Erfindung ist ein Sitzkissen gemäß Patentanspruch 1.

Weitere Ausführungsformen sind Gegenstand der Unteransprüche oder nachfolgend beschrieben.

Das erfindungsgemäße Sitzkissen für einen Gepäckträger von Zweirädern weist mindestens ein luftgefülltes Kissen und mindestens einen schlaufenförmigen Klettverschluss an der Kissenunterseite auf. Das luftgefüllte Kissen umfasst ein Kissenmittelteil und zwei Kissenseitenteile, die an gegenüberliegenden Seiten des Kissenmittelteils mit diesem verbunden sind. Bevorzugt ist das erfindungsgemäße Sitzkissen ausschließlich mit Luft gefüllt. Mit den Klettverschlüssen wird das Kissen abnehmbar am Gepäckträger befestigt. Bevorzugt weist das erfindungsgemäße Sitzkissen zwei bis vier Klettverschlüsse auf. Die Klettverschlüsse sind bevorzugt an der Unterseite des Kissen Mittelteils befestigt. Bevorzugt sind sie so positioniert, dass das Sitzkissen an der rechten und linken Seite des Gepäckträgers befestigt werden kann.

Die luftgefüllten Kissen können eine oder mehrere Luftkammern aufweisen. Das erfindungsgemäße Sitzkissen hat in einer bevorzugten Ausführungsform drei luftgefüllte Kissen, wobei ein Kissen das Kissenmittelteil ist und zwei Kissen die zwei Kissenseitenteile sind. Besonders bevorzugt ist mindestens ein luftgefülltes Kissen mit einem Ventil versehen. Geeignete Ventile sind sowohl Luftmatratzenventile, Ventile von selbstaufblasenden Kissen oder Matten als auch Fahrradventile.

Je nach Art des Ventils kann das Kissen entweder manuell mit dem Mund aufgeblasen werden oder mit Hilfe einer Pumpe, z.B. einer Fahrradpumpe oder elektrischen Pumpe, was das Aufblasen des Kissens in jeder Situation schnell und unkompliziert macht. Es gibt drei bevorzugte Ausführungen mit drei verschiedenen Ventilen, zum einem zum manuellen Aufblasen mit dem Mund, zum anderen zum Aufblasen mit eine Fahrradpumpe. Als drittes ist das Kissen mit einem offenporigen Schaumstoff gefüllt, der Luft durch ein Ventil ansaugt. Beim Öffnen des Ventils, z.B. eines Schraubventils wird Luft in die Poren des Schaumstoffs gesaugt, der sich hierdurch ausdehnt. Beim Zusammenfalten muss zunächst das Ventil geöffnet werden und die Luft strömt beim Zusammendrücken des Sitzkissen durch das Ventil aus dem Sitzkissen heraus.

Das erfindungsgemäße Sitzkissen besteht in dieser bevorzugten Ausführungsform aus drei separaten Luftkissen. Das zentrale Kissenmittelteil ist hierbei in vier verbundene Luftkammern unterteilt, die alle durch ein Ventil aufgeblasen werden können. Die Kissenseitenteile bestehen je aus einer Luftkammern und sind jeweils rechts und links angebracht und dienen als Polster für die Oberschenkelinnenseiten.

In der Ausführungsform mit Ventil(en) kann das erfindungsgemäße Sitzkissen im leeren, ungefüllten Zustand sehr klein zusammengerollt werden und kann somit überall mit hingenommen werden. Es kann unter dem eigentlichen Sattel befestigt oder in in einer Tasche öder einem Rucksack mitgeführt werden. Dieses ist ein Vorteil gegenüber den aus dem Stand der Technik bekannten Gepäckträgerpolstern, da diese zumeist aus sperrigen Materialien hergestellt sind. Das leere Kissen wird bevorzugt so zusammengefaltet, dass die beiden Kissenseitenteile auf den Kissenmittelteil gefaltet werden. Der Kissenmittelteil wird dann in Längsrichtung zusammengerollt. Hierdurch entsteht ein besonders kleines Packmaß. In einer Ausführung weist das Kissen zusätzlich ein Befestigungsmittel z.B. einen Druckknopf, eine Schleife oder einen Klettverschluss, an der Kissenunterseite auf. Hiermit wird das zusammengefaltete Sitzkissen gesichert, so dass ein versehentliches Öffnen oder Auseinanderrollen vermieden wird

Das Kissenmittelteil ist bevorzugt quaderförmig und hat bevorzugt eine Grundfläche größer gleich der Grundfläche des Gepäckträgers. Die Unterseite des erfindungsgemäßen Sitzkissens, bevorzugt die Unterseite des Kissenmittelteils, die auf dem Gepäckträger aufliegt, besteht bevorzugt aus einem dickeren Material als die anderen Seiten des Sitzkissens. Die Kissenseitenteile haben bevorzugt die Form einer Rolle oder eines Beutels mit rundem Boden. Das erfindungsgemäße Sitzkissen erinnert in seiner Optik an einen Pferdesattel oder an Motorradtaschen.

Das erfindungsgemäße Sitzkissen besteht bevorzugt aus Kunststoff, bevorzugt PVC oder natürlichem oder synthetischem Kautschuk, wie z.B. Butylkautschuk, besteht. Für ein schönes Design kann der Kunststoff in verschiedenen Musterungen oder Farben benutzt werden. Für ein stabiles Design muss das erfindungsgemäße Sitzkissen aus einem strapazierfähigen Material hergestellt werden. Das erfindungsgemäße Sitzkissen ist in einer weniger bevorzugten Ausführungsform mit einem Bezug überzogen oder zumindest teilweise mit Stoff, Leder oder Fell beklebt. Die anderen Materialien wie Leder oder Fell z.B. Lammfell werden auf das Grundmaterial geklebt. Letztere Varianten wären hierbei allerdings weniger platzsparend und mehr pflegebedürftig.

An den Seitenteilen des erfindungsgemäßen Sitzkissen sind in einer Ausführungsform zusätzliche Fußhalter, z.B. in Form von Steigbügeln befestigt. Diese sichern beim Transport von Kleinkindern die Füße, damit diese nicht in die Speichen des Reifens geraten. Optional weist das Sitzkissen einen Anschnallgurt auf, um die transportierte Person zu sichern. Der Anschnallgurt ist bevorzugt an beiden Seiten des Sitzkissens befestigt.

In einer Ausführung ist das Sitzkissen mit einer Rückenlehne, z.B. aus Plastik versehen. Die Rückenlehne ist direkt am Sitzkissen befestigt oder wird als separates Bauteil am Sattel befestigt,

Durch die Füllung mit Luft ist das erfindungsgemäße Sitzkissen sehr leicht und hat nur ein geringes Eigengewicht. Es ist variable einsetzbar und erfordert nicht erst die Montage zusätzlicher Anbauteile. Das Sitzkissen wird an einem herkömmlichen Gepäckträger, bevorzugt einem Fahrradgepäckträger montiert.

Gegenstand der Erfindung ist weiterhin ein Gepäckträger mit dem erfindungsmäßen luftgefüllten Sitzkissen. Der erfindungsgemäße Gepäckträger ist bevorzugt an einem Zweirad, bevorzugt einem Fahrrad, einem Elektrofahrrad oder einem Kraftrad befestigt, besonders bevorzugt einem Fahrrad oder Elektrofahrrad. Das Kraftrad ist z.B. ein Motorrad, ein Moped, ein Mofa oder ein Motorroller. Der erfindungsgemäße Gepäckträger kann über dem Vorderrad oder über dem Hinterrad, bevorzugt über dem Hinterrad angebracht sein.

Das erfindungsgemäße Sitzkissen ist mit den schlaufenförmigen Klettverschlüssen an der Unterseite an den Metallstangen des Gepäckträgers befestigt.

Die Erfindung wird anhand der nachfolgenden Figuren näher erläutert. Es zeigen
- Figur 1: ein erfindungsgemäßes Sitzkissen in perspektivische Ansicht,
- Figur 2: das erfindungsgemäße Sitzkissen aus Figur 1 in einer Explosionsdarstellung,
- Figur 3: ein erfindungsgemäßes Sitzkissen und ein erfindungsgemäße Gepäckträger an einem Fahrrad montiert,
- Figur 4: eine Übersicht zum Zusammenfalten eines erfindungsgemäßen Sitzkissen,
- Figur 5: zwei Varianten von Ventilen für ein erfindungsgemäßes Sitzkissen und
- Figur 6: zwei weitere Ausführungsformen des erfindungsgemäßes Sitzkissens.

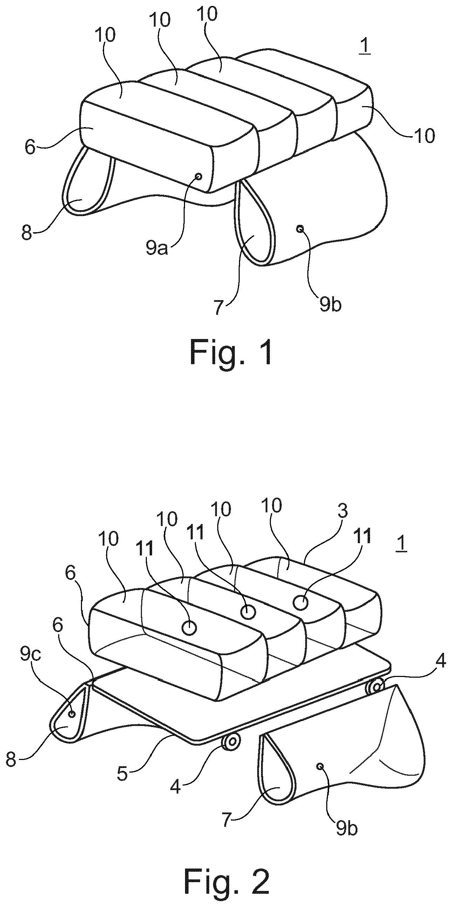

Figur 1 zeigt ein erfindungsgemäße Sitzkissen 1 mit drei luftgefüllten Kissen. Das Kissen Mittelteil 6 ist quaderförmig gestaltet und weist vier Luftkammern 10 auf, die untereinander verbunden sind. An beiden Längsseiten des Kissenmittelteils 6 sind Kissenseitenteile 7 und 8 befestigt. Das Kissenmittelteil 6 und die Kissenseitenteile 7 und 8 sind mit Luft gefüllt. Die Befüllung erfolgt über die Ventile 9a, 9b und 9c (9c nicht dargestellt).

Figur 2 zeigt das Sitzkissen 1 aus Figur 1 in einer Explosionsdarstellungen des Kissenmittelteil 6 besteht aus einem luftgefüllten Kissen 3 und einer verstärkten Kissenunterseite 5. Das Luft gefüllte Kissen 3 vier Luftkammern 10, die über Öffnungen 11 untereinander verbunden sind. Die Befüllung erfolgt über das an der Vorderseite angebrachte Ventil 9a. An der unteren Seite der verstärkten Kissenunterseite 5 sind 4 Klettverschlüsse 4 angebracht, von den 2 dargestellt sind. In den Längsseiten der Kissenunterseite 5 sind die Kissenseitenteile 7 und 8 befestigt.

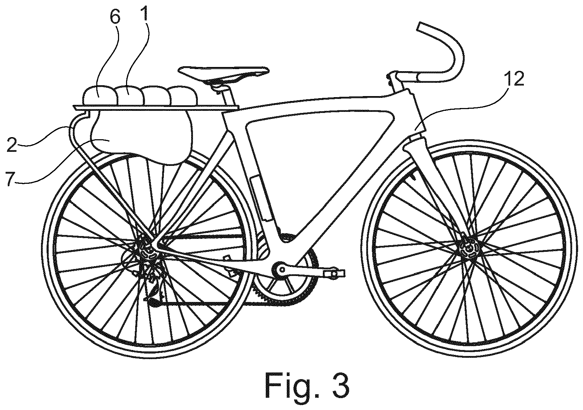

Figur 3 zeigt ein Fahrrad 12 an dem ein erfindungsgemäßer Gepäckträger 2 mit einem erfindungsgemäßen Sitzkissen 1 befestigt ist. Das Kissenmittelteil 6 liegt dabei auf dem Gepäckträger 2 auf, während die Kissenseitenteile 7 und 8 zu beiden Seiten des Gepäckträgers herabhängen.

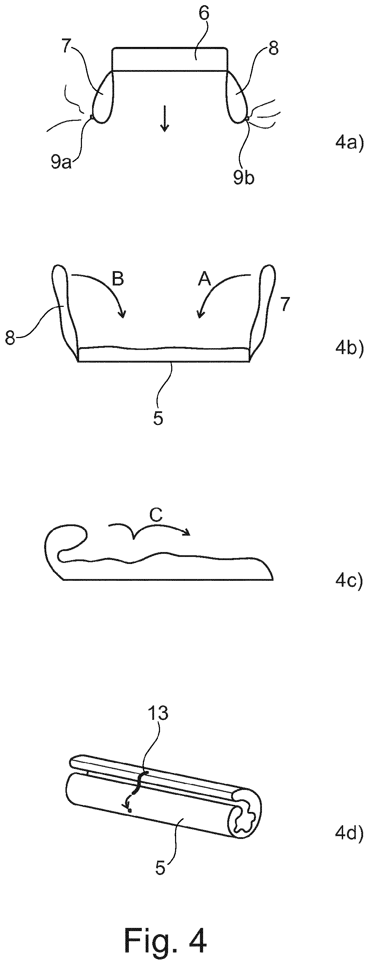

Figur 4 zeigt eine Variante zum Zusammenfalten eines erfindungsgemäßen Sitzkissen 1 im entleerten Zustand. Die Ventile 9a,b der Kissenseitenteile 7 und 8 und gegebenenfalls des Kissenmittelteil 6 werden geöffnet. Nachdem die Luft entwichen ist, wird das Kissenseitenteil 7 entlang des Pfeils A in Richtung des Kissenmittelteils 6 gefaltet (Figur 4b). Dann wird das Kissenseitenteil 8 entlang des Pfeils B gefaltet, so dass es auf dem Kissenseitenteile 7 zu liegen kommt. Die Kissenseitenteile 7 und 8 werden dabei solange gepresst, bis die Luft möglichst vollständig entwichen ist. Sofern das Ventil des Kissenmittelteils 6 noch nicht geöffnet ist, wird es geöffnet und die Luft aus dem Kissenmittelteil 6 gedrückt. Dann wird es in Längsrichtung entlang des Pfeils C aufgerollt (Figur 4c). Abschließend wird das zusammengefaltete Sitzkissen mit einem Befestigungsmittel 13 an der Kissenunterseite 5 gegen ein auseinander rollen gesichert (Figur 4d).

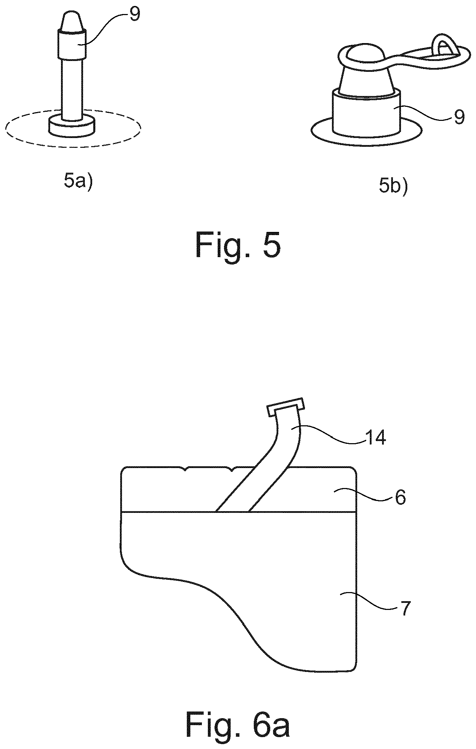

Figur 5 zeigt 2 Varianten des Ventils 9. Figur 5a zeigt ein Fahrradventil, dass mit einer entsprechenden Pumpe betätigt werden kann. Figur 5b zeigt ein Luftmatratzenventil, das mit dem Mund oder einer Pumpe betätigt werden kann.

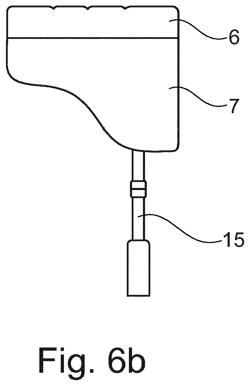

Figur 6a zeigt eine Ausführungsform des erfindungsgemäßen Sitzkissen 1 mit Anschnallgurt 14. Figur 6b zeigt eine weitere Ausführungsform des erfindungsgemäßen Sitzkissen 1 mit Steigbügel 15.

### Bezugszeichenliste

- Luftgefülltes Sitzkissen: 1
- Gepäckträger: 2
- luftgefülltes Kissen: 3
- Klettverschluss: 4
- Kissenunterseite: 5
- Kissenmittelteil: 6
- Kissenseitenteil: 7
- Kissenseitenteil: 8
- Ventil: 9
- Luftkammer: 10
- Öffnung: 11
- Fahrrad: 12
- Befestigungsmittel: 13
- Anschnallgurt: 14
- Steigbügel: 15

## Patentansprüche

1. Sitzkissen (1) für Gepäckträger von Zweirädern (2) aufweisend mindestens ein luftgefülltes Kissen (3) und mindestens einen schlaufenförmigen Klettverschluss (4) an der Kissenunterseite (5), wobei das Kissen ein Kissenmittelteil (6) und zwei Kissenseitenteile (7,8) umfasst, die an gegenüberliegenden Seiten des Kissenmittelteils (6) mit diesem verbunden sind.

2. Sitzkissen (1) gemäß Patentanspruch 1, **dadurch gekennzeichnet, dass** das Sitzkissen (1) ausschließlich mit Luft gefüllt ist.

3. Sitzkissen (1) gemäß Patentanspruch 1 oder 2, **dadurch gekennzeichnet, dass** Sitzkissen (1) drei luftgefüllte Kissen (6,7,8) umfasst, wobei ein Kissen das Kissenmittelteil (6) ist und zwei Kissen die zwei Kissenseitenteile (7,8) sind.

4. Sitzkissen (1) gemäß einem der vorhergehenden Patentansprüche, **dadurch gekennzeichnet, dass** das Kissenmittelteil (6) quaderförmig ist und bevorzugt eine Grundfläche größer gleich der Grundfläche des Gepäckträgers (2) hat.

5. Sitzkissen (1) gemäß einem der vorhergehenden Patentansprüche, **dadurch gekennzeichnet, dass** mindestens ein luftgefülltes Kissen (6,7,8), bevorzugt jedes luftgefüllte Kissen mit einem Ventil (9) versehen ist.

6. Sitzkissen (1) gemäß einem der vorhergehenden Patentansprüche, **dadurch gekennzeichnet, dass** die Kissenseitenteile (7,8) die Form einer Rolle oder eines Beutels mit rundem Boden haben.

7. Sitzkissen (1) gemäß einem der vorhergehenden Patentansprüche, **dadurch gekennzeichnet, dass** die Unterseite des Sitzkissen, bevorzugt die Unterseite des Kissenmittelteils, die auf dem Gepäckträger aufliegt, aus einem dickeren Material als die anderen Seiten des Sitzkissen besteht.

8. Sitzkissen (1) gemäß einem der vorhergehenden Patentansprüche, **dadurch gekennzeichnet, dass** das Sitzkissen (1) aus Kunststoff, bevorzugt PVC oder natürlichem oder synthetischen Kautschuk, besteht.

9. Sitzkissen (1) gemäß einem der vorhergehenden Patentansprüche, **dadurch gekennzeichnet, dass** das Sitzkissen mit einem Bezug überzogen oder zumindest teilweise mit Stoff, Leder oder Fell beklebt ist.

10. Sitzkissen (1) gemäß einem der vorhergehenden Patentansprüche, **dadurch gekennzeichnet, dass** das Sitzkissen an der Kissenunterseite (5) ein Befestigungsmittel zur Sicherung des zusammengefalteten Sitzkissens aufweist, bevorzugt einen Druckknopf, einen Klettverschluss oder eine Schleife.

11. Gepäckträger (2) mit einem luftgefüllten Sitzkissen (1) gemäß einem der vorhergehenden Patentansprüche.

12. Gepäckträger (2) gemäß Patentanspruch 11, **dadurch gekennzeichnet, dass** der Gepäckträger an einem Zweirad, bevorzugt einem Fahrrad, einem Elektrofahrrad oder einem Kraftrad befestigt ist.
